# EUROPEAN PATENT APPLICATION

(11) **EP 1 048 336 A1**
(43) Date of publication of application: **02.11.2000**
(21) Application number: 99201318.5
(22) Date of filing: 28.04.1999
(51) Int. Cl.: B01D 46/46, G01N 15/08

(54) **Method and instrument for monotoring the degree of consumption of a filter element**

(71) Applicant: ATLAS COPCO AIRPOWER N.V., 2610 Wilrijk (BE)
(72) Inventor: Lindqvist, Anders, 1410 Waterloo (BE)
(74) Representative: Donné, Eddy

(57) **Abstract**

This invention relates to a method for measuring the degree of consumption of a filter element (4), particularly in a filter of a compressor installation, according to which method the pressure drop over the filter element (4) is measured and the measured values are integrated. This invention also relates to an instrument comprising a pressure drop sensor (8) and an integrator (9) connected to the pressure drop sensor (8) and integrating the pressure drop.

## Description

The invention relates to a method for measuring the degree of consumption of a filter element, particularly in a filter of a compressor installation, according to which method the pressure drop over the filter element is measured.

When compressed air needs to be cleaner than it is when it is leaving the compressor, a filter is normally used.

This filter has a filter element with a filtermedium that traps solid particles from the airstream. As these particles are caught in the filtermedium, the resistance for the airflow is increasing while particles are collected.

When there is a flow, this resistance will cause a pressure drop over the filter. After a certain time, the pressure drop is too high, and it is time to replace the filter element.

A too high pressure drop will cause higher energy consumption as the compressor needs to compress the air to a higher value to overcome the pressure drop of the filter.

There is also a risk of the filter element bursting as the force on the filter is higher at high pressure drop.

To determine whether the pressure drop is too high, traditional filter systems are equipped with a pressure drop gauge, showing the actual pressure drop, with the maximum allowed pressure drop indicated on the scale. Monitoring the degree of consumption of the filter is done by measuring the actual pressure drop over the filter element.

This method does not work correctly when the flow is not 100% of the filter capacity.

Indeed, as at the same resistance in the filter, the pressure drop is increasing with higher airflow, the pressure drop read on the instrument will not only depend on the resistance of the filter element or cartridge, but also on the flow.

This means that if the filter element is fully consumed but the airflow is low, the reading of the pressure drop gauge will not show a consumed filter element.

If the flow then rises, the pressure drop will be much higher than allowed and the filter element can burst. If it bursts, the pressure drop will be low as there is a hole in the element and the user of the equipment may not notice the bursting until he has a breakdown caused by dirty air as the filter will not work any longer.

The aim of the invention is to obviate this drawback and to provide a method of monitoring the filter element consumption which is more accurate.

In accordance with the invention, this object is accomplished in that the pressure drop over the filter element is measured and the measured values are integrated.

The pressure drop may be measured from time to time with intervals between the measurements and the mean values of the measurements are taken and integrated.

Preferably, the actual integrated value is compared with a preset value of full consumption and a percentage of consumption is calculated.

The invention also relates to an instrument suited to perform the above-mentioned method.

The invention relates more particularly to an instrument for monitoring the filter element consumption, said instrument comprising a pressure drop sensor, characterized in that it also comprises an integrator connected to the pressure drop sensor and integrating the pressure drop.

Preferably, the instrument comprises a microprocessor comparing the value of the integrator with a preset value of consumption.

The invention will now be described by way of example and with reference to the accompanying drawings, in which:
figure 1 schematically shows a section of a filter provided with an instrument for monitoring the consumption of the filter element according to the invention;
figure 2 shows a typical graph of the increasing pressure drop of a filter element over time.

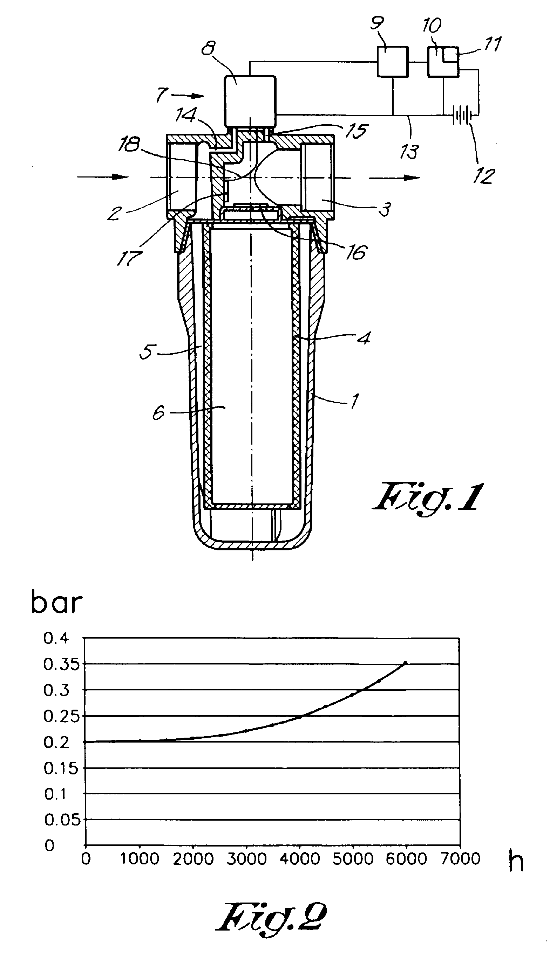

The filter shown in figure 1 is a classical compressed air filter, comprising a housing 1 composed of a lower receptacle part screwable on a head provided with an inlet 2 for compressed air and an outlet 3 for the filtered compressed air, whereby inside the receptacle of the housing 1 a tubular filter element 4 is positioned.

The inlet 2 ends inside the space 5 between the housing 1 and the filter element 4, while the inner space 6 of the filter element 4 is in connection with the outlet 3, so that the air is forced to traverse the filter element 4.

An instrument 7 for measuring the consumption of the filter element 4 is mounted on top of the housing 1 and comprises essentially an electronic pressure drop sensor 8 and an integrator 9 connected to the drop sensor 8 and to a microprocessor 10 provided with a display 11.

The electronic pressure drop sensor 8, the integrator 9 and the microprocessor 10 with the display 11 are fed by DC current from dry cells or a battery 12 through lines 13.

The electronic pressure drop sensor 8 comprises for instance a set of two transducers respectively mounted at the end of a channel 14 opening in the inlet 2 and a channel 15 opening in the outlet 3, and a differentiator making the difference in pressure.

The pressure drop sensor 8 is so programmed that it measures the pressure drop from time to time, for instance with intervals of five or ten seconds, each time during some milliseconds, for instance ten milliseconds. As the pressure drop may vary during each measurement, automatically the mean value of the measurement is taken by the sensor 8 and sent to the integrator 9 and integrated.

The integrator 9 is for example an EEPROM. The new integral of the pressure drop is stored in the EEPROM forming the integrator 9.

The microprocessor 10 compares the integrated value with a pre-set value of the pressure drop corresponding to full consumption. This value is pre-set by the manufacturer of the filter element 4 and has been derived from the typical pressure drop curve by full capacity, shown in figure 2.

The microprocessor 10 displays on the display 11 the result of the comparison as a percentage of the pre-set full consumption.

If the display 11 shows 100% consumption, the filter element 4 has to be replaced.

It is obvious that, when a new filter element 4 is inserted in the housing 1, the integrator 9 has to be reset to zero.

This may be done manually by pushing a button, or by replacing the battery 12 which is supplied together with the filter element 4.

This can also be done in a similar way by replacing the EEPROM of the integrator 9. This EEPROM is then supplied together with the filter element 4. The EEPROM may possibly be mounted on the battery 12 and replaced together.

However, this resetting is preferably made automatically by the insertion of a new filter element 4. This avoids any omission, by accident or by purpose, of resetting.

As shown in figure 1, a transponder 16 is mounted on the filter element 4. A co-operating sensor 17, detecting a new transponder 16 and hence a new filter element 4, is connected by a line 18 to the instrument 7 for resetting the integrator 9 if a new transponder 16 is detected.

As the pressure drop values are integrated by the integrator 9, a more accurate measurement of the degree of consumption of the filter element 4 is possible. Even when the element 4 bursts, the display 11 will show a degree of consumption.

## Claims

1. Method for measuring the degree of consumption of a filter element (4), particularly in a filter of a compressor installation, according to which method the pressure drop over the filter element (4) is measured, characterized in that this pressure drop over the filter element (4) is measured and the measured values are integrated.

2. Method according to claim 1, characterized in that the pressure drop is measured from time to time with intervals between the measurements.

3. Method according to claim 2, characterized in that the mean values of the measurements are taken and integrated.

4. Method according to either one of the preceding claims, characterized in that the actual integrated value is compared with a preset value of full consumption and a percentage of consumption is calculated.

5. Method according to either one of the preceding claims, characterized in that the measurement is reset by replacing an element used for the measurement such as a battery (12) or an electronic component when changing the filter element (4).

6. Method according to either one of claims 1 to 4, characterized in that the measurement is automatically reset by changing the filter element (4) by electronically detecting the presence of a new filter element (4).

7. Instrument for monitoring the filter element consumption, said instrument comprising a pressure drop sensor (8), characterized in that it also comprises an integrator (9) connected to the pressure drop sensor (8) and integrating the pressure drop.

8. Instrument according to claim 7, characterized in that it comprises a microprocessor (10) comparing the value of the integrator (9) with a preset value of consumption.

9. Instrument according to claim 8, characterized in that the microprocessor (10) is provided with a display (11).

10. Instrument according to either one of claims 7 to 9, characterized in that the pressure drop sensor (8) is programmed to measure the pressure drop with intervals.

11. Instrument according to claim 10, characterized in that the pressure drop sensor (8) is programmed to take the mean value of each measurement before sending it to the integrator (9).

12. Instrument according to either one of claims 7 to 11, characterized in that a transponder (16) is mounted on the filter element (4), while a sensor (17) co-operating with it is connected to the integrator (9) for resetting it.

13. Instrument according to either one of claims 7 to 11, characterized in that it comprises a battery (12) and the integrator (9) is reset by changing the battery (12) and/or one of the electronic components.
